# EUROPEAN PATENT SPECIFICATION

(11) **EP 3 936 747 B1**
(45) Date of publication and mention of the grant of the patent: **08.11.2023**
(21) Application number: 21184216.6
(22) Date of filing: 07.07.2021
(51) Int. Cl.: F16K 27/00, E03C 1/02, E03C 1/042, F16K 27/02

(54) **RECESSED MODULAR ELEMENT FOR DISPENSING WATER AND MODULAR SYSTEM CONSISTING OF A PLURALITY OF SUCH ELEMENTS**
EINGEBAUTES MODULARES ELEMENT ZUR WASSERABGABE UND MODULARES SYSTEM AUS EINER VIELZAHL SOLCHER ELEMENTE
ÉLÉMENT MODULAIRE ENCASTRÉ POUR DISTRIBUER DE L'EAU ET SYSTÈME MODULAIRE CONSTITUÉ D'UNE PLURALITÉ DE TELS ÉLÉMENTS

(30) Priority: 09.07.2020 IT 202000016696
(43) Date of publication of application: 12.01.2022
(73) Proprietor: Fima Carlo Frattini S.P.A., 28010 Briga Novarese (Novara) (IT)
(72) Inventor: VERCELLI, Davide, 13019 Varallo (Vercelli) (IT)
(74) Representative: Mazzitelli, Maria

(56) References cited:
- EP-A1- 1 218 656
- EP-A1- 3 271 518
- EP-A1- 3 505 800
- EP-A2- 1 277 997
- IT-U1- MI20 130 138
- US-A1- 2013 062 422

## Description

The present invention relates to a recessed modular element for dispensing water and a modular system made up of a plurality of such elements for dispensing water in several points with separate controls, for example in a shower cubicle.

As is known, a plumbing system, for example, for bathrooms or shower cubicles provides for several points of use or of outlet of water, such as a spout, whirlpool or front hand shower, overhead shower head, spout for filling a bath below and the like.

Normally, for each of these uses, a dedicated water dispensing device is provided, which entails: 1. installation complexity due to the fact of having to reach the various dispensing points with separate outlets; 2. the need to have a plurality of mixing devices for the regulation of the water temperature; 3. the need, in the case of installations based on a mixer + diverter, to correctly indicate the corresponding outlet on the handle of the component that diverts the water to the various utilities in order to know with certainty which outlet is being actuated.

IT MI 20130138 U1 describes a modular thermostatic device for taps, comprising a thermostatic mixer body and one or more shut-off bodies or modules physically connected to the thermostatic mixer and to each other in such a way as to form a centralised integrated unit, from which the various utilities are controlled remotely by rotating the respective screws on the front of the various modules. Each module is provided with two outlets, placed respectively in the lower part and in the upper part, without the possibility of a direct connection to a utility, for example the pipe of a tap for dispensing water.

The object of the invention is to eliminate the disadvantages of the prior art illustrated above.

More particularly, an object of the invention is to provide a recessed modular element that allows several water outlet points that can be selected during installation as a function of the required use, with the possibility of installing the modular element at this utility or at a distance therefrom.

Another object of the invention is to provide such a modular recessed element that can be easily installed in any type of wall, whether masonry, plasterboard, wood or the like.

Yet another object of the invention is to provide such a modular recessed element which is simple and economical to manufacture.

A further object of the invention is to provide a modular system comprising a plurality of such recessed elements to cover all the various required points of use.

A further, and principal, object of the invention is to have a "local" control for dispensing water from a given accessory.

These and other objects of the invention are achieved by the recessed modular water dispensing element that has the features of the appended independent claim 1.

Advantageous embodiments of the invention are disclosed in the dependent claims.

Substantially, the recessed modular element for dispensing water according to the invention can be installed in series with identical elements to form a modular system, and comprises an inner body and an outer shell, said body having a substantially parallelepiped shape with two lateral fittings irrespectively for the entry or the exit of water that flows inside the body, coming from a delivery and directed towards another body downstream, three outlets for the same number of utilities, placed in the lower part, front part and upper part, respectively, of the body, and a push-button mechanism, housed in a front fitting of the body, for opening and stopping the flow of water towards one of the abovementioned outlets selected during the installation of the recessed body as a function of the required use.

Further features of the invention will be made clearer by the following detailed description, referred to a purely non-limiting illustrative example of embodiment, illustrated in the accompanying drawings in which:
Fig. 1 is a blown-up axonometric view of a modular element according to the invention;
Fig. 2 shows various views and sections of the assembled body of the modular element of Fig.1, in particular, Figs. 2a-d are, respectively, an axonometric view, a front view, a view from the left side and a plan view from above, and Figs. 2e-g are, respectively, sectional views along planes A-A, B-B and C-C of Fig. 2b;
Fig. 3 is a partially blown-up axonometric view showing by way of an example a modular system comprising three elements according to the invention and a mixer upstream for regulating the temperature of the water;
Figs. 4a and 4b are, respectively, a front view and a vertical median section view along plane B-B of Fig. 4a, of a modular element according to the invention, arranged with a front spout,
Fig. 5 is an example view of a possible arrangement, externally to a wall, of the mixer controls and of a modular element according to the invention;
Fig. 6 is a further example view showing the part external to a wall of three modular elements according to the invention, two for controlling respective front hand showers, one for controlling another utility not shown, such as for example an overhead shower.

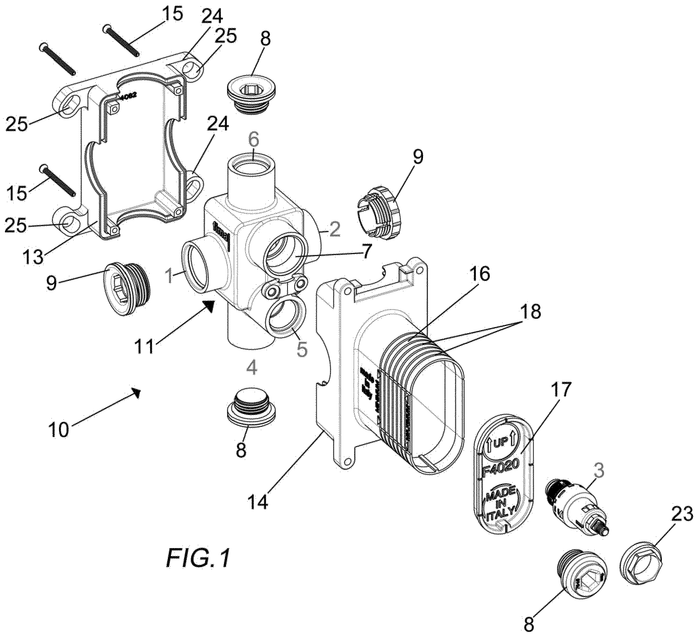

Referring to these drawings, and for the time being in particular to Figure 1, a recessed modular element for dispensing water according to the invention has been denoted as a whole by reference numeral 10 and comprises an inner body 11 preferably in metal and an outer shell 12 preferably in plastic material, consisting of a rear half-shell 13 and a front half-shell 14, assembled one with the other with hermetic closure of the body 11 by means of screws 15.

Naturally, the materials of the body and of the shell may be different from those indicated.

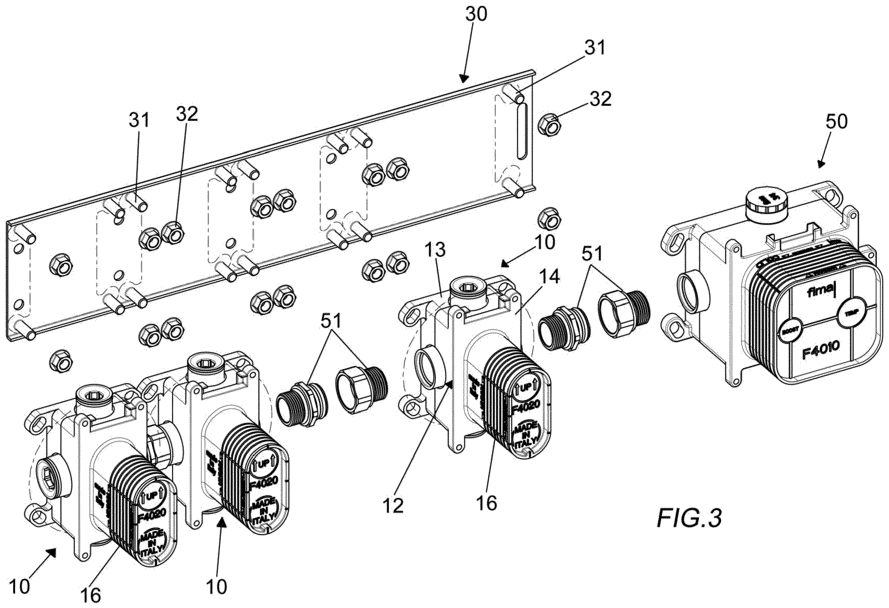

The body 11 has a substantially parallelepiped shape and is shaped so as to have two openings or fittings 1, 2 irrespectively for the entry or the exit of the water that flows inside the body 11, coming from a delivery and directed towards another body 11 downstream (Fig.3 ), three outlets 4, 5, 6 for the same number of utilities, located in the lower, front and upper part, respectively, of the body 11, and a push-button mechanism 3, housed in a front fitting 7 of the body 11, to open and stop the flow of water towards one of the abovementioned outlets selected during the phase of installation of the recessed body 11 as a function of the required use.

In fact, the outlets that are not to be used are simply left closed by not removing the corresponding pre-installed sealing plug 8. Similarly, a plug 9 for closure of an outlet fitting 1 or 2 is not removed, in the case wherein the body 11 corresponds to the end element 10 of a modular system.

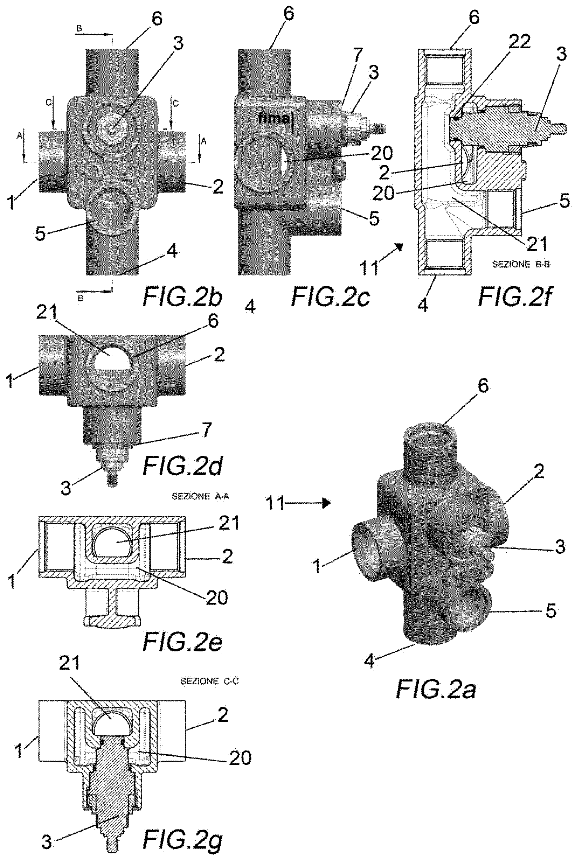

Referring to Figures 2a-g, the passage of the flow of water inside the body 11 is described in brief, which is quite intuitive.

As can be seen in particular from the side view of Fig. 2c and from the section of Fig. 2f, the fittings 1, 2 of entry or exit of the water are constantly in communication one with the other through a passage 20 inside the body 11.

Likewise, the upper outlets 6 and lower outlets 4 towards the utilities are constantly in communication one with the other through a passage 21 which can be seen in the view from above of Fig. 2d and in the sections of Figs. 2e and 2f, which also communicates with the front outlet 5.

The push-button mechanism 3, which partially occupies the passage 20, normally occludes a hole 22 for access to the passage 21. Actuation of the push-button mechanism 3 causes the opening of said hole 22, placing in communication the passage or conduit 20 in which the supply water flows with the passage or conduit 21, allowing the supply to one of the outlets 4, 5, 6 selected. Subsequent actuation of the push-button mechanism 3 causes the flow to stop.

Returning to Figure 1, the front half-shell 14 differs from the rear half-shell 13 in that it has a front tubular extension 16 with elliptical section, closed by a plug 17, designed to house the front outlet 5 of the water and the front fitting 7 for the push-button mechanism 3, which is attached by means of a ring nut 23.

The tubular extension 16 has a series of perimeter incisions 18 which allow the removal of sections of different length of this extension, in order to adapt it to the thickness of the wall in which the element 10 is placed, such that the front end of the extension 16 is arranged practically flush with the wall.

The rear half-shell 13 has four angular ears 24 provided with slotted holes 25 for attaching of the element 10, for example to a rack 30 shown in Fig. 3, provided with pins 31 suitable for inserting in said holes 25 and being engaged by locking nuts 32.

Fig. 3 shows a possible modular system that can be obtained with the elements 10, upstream of which is arranged a thermostatic mixer assembly 50, structurally in itself known, having the same external conformation of the elements 10, apart from a greater width, so as to be able to be connected to them and be mounted on the rack 30.

In the example shown, three elements 10 are shown, two of which are already connected one to the other and the third shown separate, to be joined both to the element 10 adjacent thereto and to the mixer 50 upstream by means of the fittings 51 illustrated.

The modular system according to the invention comprises recessed elements 10 which are totally disconnected one from the other, provided with a push-button actuation 3 for opening and closing the water (unlike known systems which normally use a screw) and which allow the supply of utilities independent one of the other, such as shower heads, hand showers, whirlpools, spouts, etc.

The structure of the system can range from the compact one obtained by placing a module 10 adjacent to a mixer 50 to more complex structures with 2, 3 (such as that in Fig. 3) or 4 utilities (outlets) obtained using corresponding installation racks 30 with 2, 3 or 4 uses, up to more articulated structures in which the mixing unit 50 and the recessed units 10 are located in different and free positions, for example inside a shower cubicle.

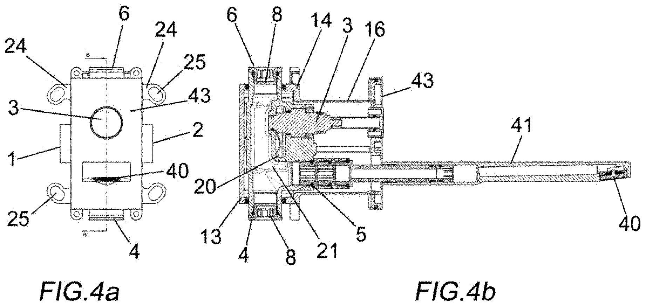

Figures 4a and 4b show by way of example a modular recessed element 10 provided with a front spout 40 mounted at the end of a pipe 41, connected to the front outlet 5 of the body 11. As can be seen, the other two outlets 4 and 6 are closed by respective plugs 8.

The tubular extension 16 of the front half-shell 14 ends with a front aesthetic plate 43, which is placed against the masonry wall, provided with openings for access to the push-button mechanism 3 and for the passage of the supply pipe of the pipe 41 of the spout 40.

It is reiterated that what is shown is only an example of an application of the modular element 11 and that numerous other water dispensing applications are possible.

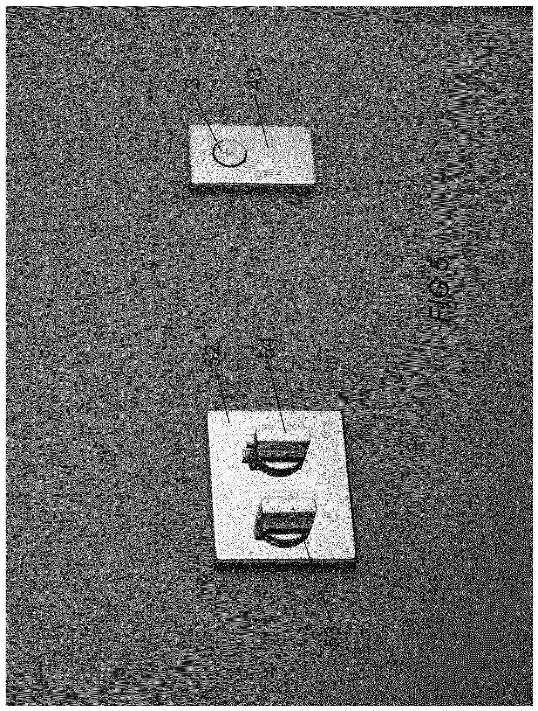

Fig. 5 schematically shows the external part of a wall on which are mounted an aesthetic plate 43 in which is placed only the push-button mechanism 3 for the control of a utility that remains inside the wall (recessed shower head, shower arm + shower head or tub filling by means of water delivery from the tub drain column), through one of the two outlets 4, 6, and an aesthetic plate 52 with controls 53, 54 of the thermostatic mixer 50 for regulating the flow rate and the temperature of the water to be sent to the recessed module 10.

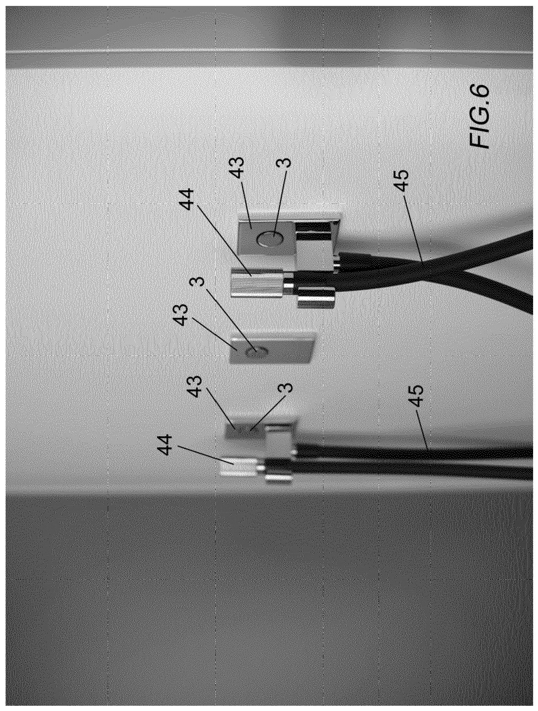

Fig. 6 is a view of the external part of a masonry wall like Fig. 5, showing three aesthetic plates 43 at the same number of recessed modules 10, two for supplying respective frontal hand showers 44 connected by means of a flexible pipe 45 to the front outlet 5, and one for supplying an outlet that remains inside the wall.

From what has been disclosed, the advantages appear clear of the invention which, with a single modular element 10, makes it possible to carry out installations of several elements, with independent control, in series to fulfil any need.

Naturally, the invention is not limited to the particular embodiment previously described and illustrated in the accompanying drawings, but numerous detailed changes may be made thereto within the reach of the person skilled in the art, without thereby departing from the scope of the invention itself, as defined in the appended claims.

## Claims

1. Recessed modular element (10) for the supply of water that can be installed in series with identical elements (10), placed adjacent or distanced one in relation to the other, to form a modular system, comprising an inner body (11) and an outer shell (12), said body (11) having a substantially parallelepiped shape with two lateral fittings (1, 2) irrespectively for the entry or the exit of the water that flows inside the body (11), coming from a delivery and directed towards another body (11) downstream,
**characterized by**
three outlets (4, 5, 6) for the same number of utilities, placed in the lower, front and upper part, respectively, of the body (11), and a push-button mechanism (3), housed in a front fitting (7) of the body (11), to open and stop the flow of water towards one of said outlets (4, 5, 6) selected during the phase of installation of the recessed body (11) as a function of the use required, said front outlet (5) being directly connectable to a pipe (41) for the dispensing of water.

2. Recessed modular element (10) according to claim 1, **characterised in that** those not used of said outlets (4, 5, 6) of the body (11) are closed by respective plugs (8), as is also closed by a plug (9) the outlet fitting (1) or (2) in the absence of an element (10) downstream.

3. Recessed modular element (10) according to claim 1 or 2, **characterised in that** said water inlet or outlet fittings (1, 2) are in constant communication one with the other through a passage or conduit (20) inside the body (11), and said outlets (4, 5, 6) towards the utilities are constantly in communication with each other through a separate passage or conduit (21), the push-button mechanism (3) partially occupying the passage (20) and normally occluding a hole (22) for access to the passage (21), so that its actuation causes the opening of said hole (22) by placing in communication the passage or conduit (20) in which the feed water flows with the passage or conduit (21), allowing delivery to one of the selected outputs (4, 5, 6).

4. Recessed modular element (10) according to any one of the preceding claims, **characterised in that** said outer shell (12) consists of a rear half-shell (13) and a front half-shell (14), assembled together with hermetic closure of the body (11) by means of screws (15), the front half-shell (14) presenting an elliptical section front tubular extension (16), suitable for housing the front water outlet (5) and the front fitting (7) for the push-button mechanism (3).

5. Recessed modular element (10) according to claim 4, **characterised in that** said tubular extension (16) has a series of perimeter incisions (18) which allow the removal of sections of different length of this extension, so as to adapt it to the thickness of the wall in which the recessed element (10) is placed, such that the front end of the extension (16) is placed practically flush with the wall.

6. Recessed modular element (10) according to claim 4 or 5, **characterised in that** said rear half-shell (13) has four corner ears (24) provided with slotted holes (25) for the fixing of the element (10), for example to a rack (30) provided with pins (31) apt to be inserted in said holes (25) and to be engaged by locking nuts (32).

7. Recessed modular element (10) according to any one of claims 4 to 6, **characterised in that** said tubular extension (16) of the front half-shell (14), following installation, ends with a front aesthetic plate (43), which is positioned against the masonry wall, provided with openings for access to the push-button mechanism (3) and to the front exit (5), if used.

8. Modular system comprising one or more recessed elements (10) according to any one of the preceding claims, arranged in series, and an upstream thermostatic mixing unit (50).

9. Modular system according to claim 8, wherein said recessed element(s) (10) and said thermostatic mixing unit (50) can be installed on a rack (30).

## Patentansprüche

1. Eingelassenes modulares Element (10) zur Zuführung von Wasser, das in Reihe mit identischen Elementen (10), die in Bezug aufeinander benachbart oder beabstandet platziert sind, installiert werden kann, um ein modulares System zu bilden, und das einen Innenkörper (11) und eine Außenschale (12) umfasst, wobei der Körper (11) eine im Wesentlichen parallelepipedische Form mit zwei unabhängigen seitlichen Anschlussstücken (1, 2) für den Eintritt oder den Austritt des im Inneren des Körpers (11) fließenden Wassers aufweist, das aus einer Zuleitung kommt und einem stromabwärts gelegenen anderen Körper (11) zugeführt wird,
**gekennzeichnet durch**
drei Auslässe (4, 5, 6) für die gleiche Anzahl von Versorgungseinrichtungen, die jeweils in dem unteren, vorderen und oberen Teil des Körpers (11) platziert sind, und einen Druckknopfmechanismus (3), aufgenommen in einem vorderen Anschlussstück (7) des Körpers (11), zum Öffnen und Stoppen des Wasserflusses hin zu einem der Auslässe (4, 5, 6), der während der Phase der Installation des eingelassenen Körpers (11) in Abhängigkeit von der erforderten Verwendung ausgewählt wird, wobei der vordere Auslass (5) direkt mit einem Leitungsrohr (41) für die Abgabe von Wasser verbindbar ist.

2. Eingelassenes modulares Element (10) nach Anspruch 1, **dadurch gekennzeichnet, dass** die nicht verwendeten der Auslässe (4, 5, 6) des Körpers (11) durch jeweilige Stopfen (8) verschlossen sind, genauso wie bei Fehlen eines stromabwärts gelegenen Elements (10) auch das Auslass-Anschlussstück (1) oder (2) durch einen Stopfen (9) verschlossen ist.

3. Eingelassenes modulares Element (10) nach Anspruch 1 oder 2, **dadurch gekennzeichnet, dass** die Wassereinlass- oder Auslass-Anschlussstücke (1, 2) durch einen Durchlass oder Kanal (20) im Inneren des Körpers (11) in ständiger Verbindung miteinander stehen, und die Auslässe (4, 5, 6) hin zu den Versorgungseinrichtungen durch einen separaten Durchlass oder Kanal (21) in ständiger Verbindung miteinander stehen, wobei der Druckknopfmechanismus (3) den Durchlass (20) teilweise einnimmt und ein Loch (22) für einen Zugang zu dem Durchlass (21) im Normalfall so verdeckt, dass seine Betätigung das Öffnen des Lochs (22) bewirkt, indem der Durchlass oder Kanal (20), in dem das Speisewasser fließt, mit dem Durchlass oder Kanal (21) in Verbindung gebracht wird, was eine Zufuhr zu einem der ausgewählten Ausgänge (4, 5, 6) ermöglicht.

4. Eingelassenes modulares Element (10) nach einem der vorhergehenden Ansprüche, **dadurch gekennzeichnet, dass** die Außenschale (12) aus einer hinteren Halbschale (13) und einer vorderen Halbschale (14) besteht, die unter hermetischem Verschluss des Körpers (11) mittels Schrauben (15) zusammengesetzt sind, wobei die vordere Halbschale (14) eine vordere röhrenförmige Verlängerung (16) mit elliptischem Querschnitt aufweist, die zum Aufnehmen des vorderen Wasserauslasses (5) und des vorderen Anschlussstücks (7) für den Druckknopfmechanismus (3) geeignet ist.

5. Eingelassenes modulares Element (10) nach Anspruch 4, **dadurch gekennzeichnet, dass** die röhrenförmige Verlängerung (16) eine Reihe von Umfangseinschnitten (18) aufweist, die das Entfernen von Abschnitten unterschiedlicher Länge von dieser Verlängerung ermöglichen, um sie derart an die Dicke der Wand, in der das eingelassene Element (10) platziert ist, anzupassen, dass das vordere Ende der Verlängerung (16) praktisch bündig mit der Wand platziert ist.

6. Eingelassenes modulares Element (10) nach Anspruch 4 oder 5, **dadurch gekennzeichnet, dass** die hintere Halbschale (13) vier Winkelösen (24) aufweist, die mit Langlöchern (25) zur Befestigung des Elements (10), beispielsweise an einer Halterung (30), die mit Stiften (31) bereitgestellt ist, die dafür geeignet sind, in die Löcher (25) eingeführt und von Sicherungsmuttern (32) in Eingriff genommen zu werden, bereitgestellt sind.

7. Eingelassenes modulares Element (10) nach einem der Ansprüche 4 bis 6, **dadurch gekennzeichnet, dass** die röhrenförmige Verlängerung (16) der vorderen Halbschale (14), im Anschluss an eine Installation, in einer vorderen ästhetischen Platte (43), die an dem Mauerwerk anliegend positioniert ist, endet, die mit Öffnungen für einen Zugang zu dem Druckknopfmechanismus (3) und dem vorderen Ausgang (5), sofern verwendet, bereitgestellt ist.

8. Modulares System, das ein oder mehrere eingelassene Elemente (10) nach einem der vorhergehenden Ansprüche, angeordnet in Reihe, und eine stromaufwärts gelegene thermostatische Mischeinheit (50) umfasst.

9. Modulares System nach Anspruch 8, wobei das/die eingelassene(n) Element(e) (10) und die thermostatische Mischeinheit (50) an einer Halterung (30) installiert werden können.

## Revendications

1. Élément modulaire encastré (10) pour l'alimentation d'eau, susceptible d'être installé en série avec des éléments identiques (10), placés à côté ou à distance les uns des autres, pour former un système modulaire, comprenant un corps intérieur (11) et une coque extérieure (12), ledit corps (11) présentant une forme substantiellement parallélépipédique avec deux raccords latéraux (1, 2) indépendamment pour l'entrée ou la sortie de l'eau s'écoulant à l'intérieur du corps (11), venant d'une distribution et dirigée vers un autre corps (11) en aval,
**caractérisé en ce que**
trois sorties (4, 5, 6) pour le même nombre d'installations, placées dans la partie inférieure, avant et supérieure, respectivement, du corps (11), et un mécanisme de bouton poussoir (3), logé dans un raccord avant (7) du corps (11), pour ouvrir et arrêter l'écoulement d'eau vers l'une desdites sorties (4, 5, 6) sélectionnées pendant la phase d'installation du corps encastré (11) en fonction de l'utilisation requise, ladite sortie avant (5) pouvant être raccordée directement à un tuyau (41) pour la distribution d'eau.

2. Élément modulaire encastré (10) selon la revendication 1, **caractérisé en ce que** les sorties (4, 5, 6) non utilisées du corps (11) sont fermées par des bouchons (8) respectifs, et le raccord de sortie (1) ou (2) est également fermé par un bouchon (9) en l'absence d'un élément (10) en aval.

3. Élément modulaire encastré (10) selon la revendication 1 ou 2, **caractérisé en ce que** lesdits raccords d'entrée ou de sortie d'eau (1, 2) sont en communication constante entre eux par le biais d'un passage ou conduit (20) à l'intérieur du corps (11), et lesdites sorties (4, 5, 6) vers les installations sont constamment en communication entre elles par le biais d'un passage ou conduit séparé (21), le mécanisme de bouton poussoir (3) occupant partiellement le passage (20) et fermant normalement un trou (22) pour l'accès au passage (21), de telle façon que son actionnement entraîne l'ouverture dudit trou (22) en mettant en communication le passage ou conduit (20) dans lequel l'eau d'alimentation s'écoule avec le passage ou conduit (21), permettant la distribution vers l'une des sorties (4, 5, 6) sélectionnées.

4. Élément modulaire encastré (10) selon l'une quelconque des revendications précédentes, **caractérisé en ce que** ladite coque extérieure (12) consiste en une demi-coque arrière (13) et une demi-coque avant (14), assemblées entre elles avec une fermeture hermétique du corps (11) au moyen de vis (15), la demi-coque avant (14) présentant une extension tubulaire avant de section elliptique (16), adaptée pour accueillir la sortie d'eau avant (5) et le raccord avant (7) pour le mécanisme de bouton poussoir (3).

5. Élément modulaire encastré (10) selon la revendication 4, **caractérisé en ce que** ladite extension tubulaire (16) comporte une série d'incisions circonférentielles (18) permettant le retrait de sections de différentes longueurs de cette extension, de manière à l'adapter à l'épaisseur du mur dans lequel l'élément encastré (10) est placé, de telle façon que l'extrémité avant de l'extension (16) est placée quasiment en affleurement avec le mur.

6. Élément modulaire encastré (10) selon la revendication 4 ou 5, **caractérisé en ce que** ladite demi-coque arrière (13) comporte quatre oreilles de coin (24) dotées de trous en fente (25) pour la fixation de l'élément (10), par exemple à un support (30) doté de broches (31) aptes à être insérées dans lesdits trous (25) et engagées par des écrous de blocage (32).

7. Élément modulaire encastré (10) selon l'une quelconque des revendications 4 à 6, **caractérisé en ce que** ladite extension tubulaire (16) de la demi-coque avant (14), après installation, se termine par une plaque décorative avant (43), laquelle est positionnée contre le mur de maçonnerie, dotée d'ouvertures pour l'accès au mécanisme de bouton poussoir (3) et à la sortie avant (5), si utilisée.

8. Système modulaire comprenant un ou plusieurs éléments encastrés (10) selon l'une quelconque des revendications précédentes, disposés en série, et une unité de mélange thermostatique amont (50).

9. Système modulaire selon la revendication 8, dans lequel ledit/lesdits élément(s) encastré(s) (10) et ladite unité de mélange thermostatique (50) peuvent être installés sur un support (30).
